# EUROPEAN PATENT APPLICATION

(11) **EP 1 976 302 A2**
(43) Date of publication of application: **01.10.2008**
(21) Application number: 08103125.4
(22) Date of filing: 28.03.2008
(51) Int. Cl.: H04N 7/26

(54) **Image processing apparatus and method**

(30) Priority: 29.03.2007 JP 2007087753
(71) Applicant: NEC CORPORATION, Tokyo (JP)
(72) Inventor: Sumiyoshi, Yasuaki c/o NEC Corporation, Minato-ku, Tokyo (JP)
(74) Representative: Betten & Resch

(57) **Abstract**

The present invention is directed to prevent congestion in conversion of an image format in a main processing unit. An image processing apparatus for converting an input image to an image in a predetermined format includes: a main processing unit capable of converting an input image to an image in a predetermined format single-handedly; a preprocessing unit for preprocessing the input image; and a preprocessing control, unit for determining a process to be pe.rformed in the preprocessing unit so that a process amount in the main processing unit when the preprocessing unit preprocesses an input image and, after that, the main processing unit converts the preprocessed image to an image in the predetermined format becomes less than a process amount when the main processing unit converts an input image to an image in the predetermined format single-handedly, wherein the preprocessing unit preprocesses the input image with the determined process, and the main processing unit converts the preprocessed image to an image in the predetermined format.

## Description

### BACKGROUND OF THE INVENTION

### Field of the Invention:

The present invention relates to an image processing apparatus and method for converting the format of image data.

### Description of the Related Art:

Many of cellular phones in recent years have the function of capturing a still image, the function of transmitting a still image, the function of receiving a still image, and the function of displaying a still image as disclosed in non-patent document 1 as set forth below. Many of cellular phones in recent years have the function of capturing a moving image, the function of transmitting a moving image, the function of receiving a moving image, and the function of displaying a moving image.

However, the formats of still images and moving images vary among models. For example, the formats of a still image and a moving image which can be dealt vary among the generations of cellular phones. Even in cellular phones of the same generation, the formats of a still image and a moving image which can be dealt vary among grades.

There is consequently a case that the format of an image has to be converted in order to transfer an image captured by a cellular phone (hereinbelow, the "image" is used as a generic name of a still image and a moving image) to another cellular phone and to enable the image to be displayed on the another cellular phone.

To address the case, the function of converting the format of an image is added to a mail server of a cellular phone carrier. The format converting function converts the format of a moving image sent from the transmitter to a format which can be displayed on the model of the cellular phone as the destination of the mail.

Non-patent document 1: Provision of "automatic image converting function" making "Sha-Mail" (service of sending a mail attached with an image) more convenient, (URL: http://broadband.softbankmobile.co.jp/corporate/release/pdf/040728.pdf), July 28, 2004.

The number of pixels of an image varies from tens of megabytes to hundreds of megabytes among models, so that a format converter has to convert an image of hundreds of megabytes to an image of tens of megabytes. Therefore, the required process amount increases.

There is another case that an image of hundreds of megabytes sent from a personal computer has to be converted to an image of tens of megabytes.

There is still another case that a moving image in a certain format has to be converted to a moving image in another format. The required process amount increases also in such a case.

It can be considered to provide a number of format converters and perform distributed processing. However, the format converters of the number proportional to the process amount have to be provided, and it is not efficient.

### SUMMARY OF THE INVENTION

The present invention has been achieved in consideration of the problems and an object of the invention is to provide an image processing apparatus realizing reduced load on a format converter and enhance tolerance for high load.

Another object of the present invention is directed to prevent congestion in conversion of an image format in a main processing unit.

According to the present invention, there is provided an image processing apparatus for converting an input image to an image in a predetermined format, comprising: a main processing unit capable of converting an input image to an image in a predetermined format single-handedly; a preprocessing unit for preprocessing the input image; and a preprocessing control unit for determining a process to be performed in the preprocessing unit so that a prescribed process amount when the preprocessing unit preprocesses an input image and, after that, the main processing unit converts the preprocessed image to an image in the predetermined format becomes less than a process amount when the main processing unit converts an input image to an image in the predetermined format single-handedly, wherein the preprocessing unit preprocesses the input image with the determined process, and the main processing unit converts the preprocessed image to an image in the predetermined format.

In addition, according to the present invention, there is provided an image processing method for converting an input image to an image in a predetermined format, comprising: a main processing step capable of converting an input image to an image in a predetermined format single-handedly; a preprocessing step of preprocessing the input image; and a preprocess control step of determining a process to be performed in the preprocessing step so that a prescribed process amount when an input image is preprocessed in the preprocessing step and, after that, the preprocessed image is converted to an image in the predetermined format in the main processing step becomes less than a process amount when an input image is converted to an image in the predetermined format only in the main processing step, wherein the input image is preprocessed with the determined process in the preprocessing step, and the preprocessed image is converted to an image in the predetermined format in the main processing step.

Further, according to the present invention, there is provided a computer-readable media on which a program is recorded, said program causes a computer to perform an image processing method for converting an input image to an image in a predetermined format, comprising: a main processing step capable of converting an input image to an image in a predetermined format single-handedly; a preprocessing step of preprocessing the input image; and a preprocess control step of determining a process to be performed in the preprocessing step so that a prescribed process amount when an input image is preprocessed in the preprocessing step and, after that, the preprocessed image is converted to an image in the predetermined format in the main processing step becomes less than a process amount when an input image is converted to an image in the predetermined format only in the main processing step, wherein the input image is preprocessed with the determined process in the preprocessing step, and the preprocessed image is converted to an image in the predetermined format in the main processing step.

### BRIEF DESCRIPTION OF THE DRAWINGS

FIG. 1 is a block diagram showing the configuration of a system including an image processing apparatus as an embodiment of the present invention; and
FIG. 2 is a flowchart showing image format converting operation in the embodiment of the invention.

### DETAILED DESCRPTION OF PREFERRED EMBODIMENTS

The best mode for carrying out the present invention will be described in detail hereinbelow with reference to the drawings.

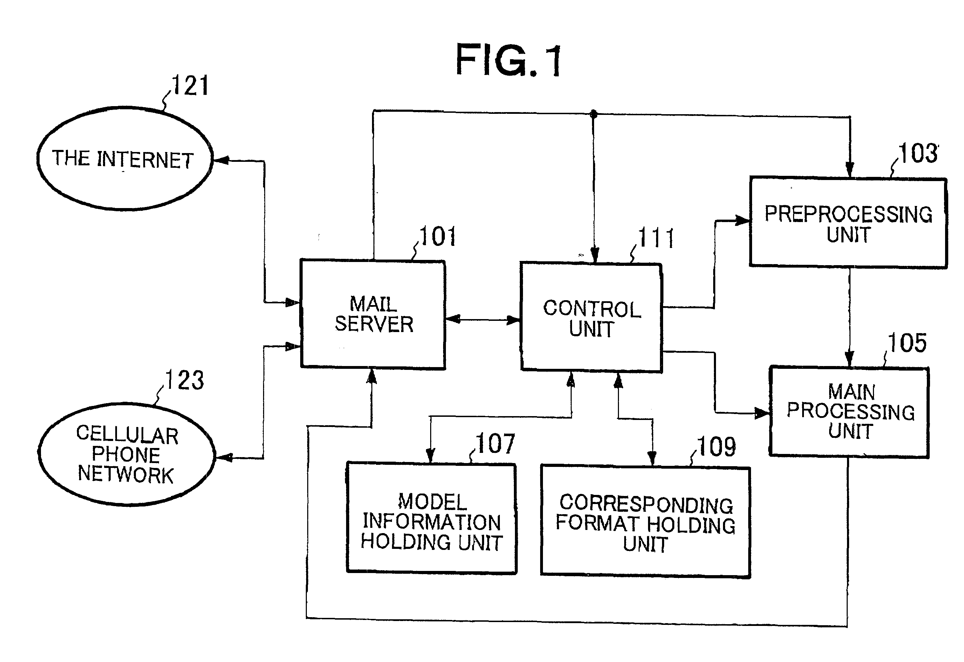

FIG. 1 is a block diagram showing the configuration of a system including an image processing apparatus as an embodiment of the present invention.

A mail server 101 is connected to the Internet 121 and a cellular phone network 123. The mail server 101 performs transmission/reception of mails among cellular phone terminals connected to the cellular phone network 123 and performs transmission/reception of mails between the cellular phone terminals connected to the cellular phone network 123 and the Internet 121.

A preprocessing unit 103 performs preprocess for conversion of the format of an image.

A main processing unit 105 performs a main process of the conversion of the format of an image.

A model information holding unit 107 holds the corresponding relation between telephone numbers of cellular phones and model identification information.

A corresponding format holding unit 109 holds the corresponding relation between model identification information and corresponding format identification information.

A control unit 111 controls the whole image format conversion.

In the conventional technique, the preprocessing unit 103 is not provided, and the main processing unit 105 functions as a format converter single-handedly.

A mail with an attached image file transmitted from a personal computer or the like connected to the Internet 121 and a mail with an attached image file transmitted from a cellular phone connected to the cellular phone network 123 are transmitted to a cellular phone as a destination connected to the cellular phone network 123. During the period since the mail server 101 receives an attached image file until the mail server 101 transmits it, the attached image file passes through the preprocessing unit 103 and the main processing unit 105 and is subject to format conversion.

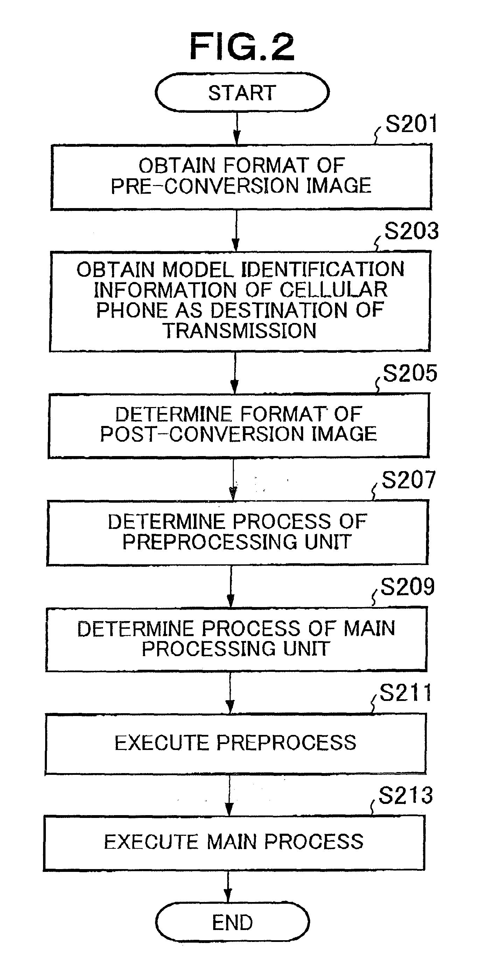

The image format converting operation performed by the system shown in FIG. 1 will now be described with reference to FIG. 2.

First, the control unit 111 obtains the format of a pre-conversion image with reference to the pre-conversion image in the mail server 101 (step S201).

Next, the control unit 111 obtains the telephone number of a cellular phone as a destination from the mail server 101 and obtains model identification information corresponding to the telephone number from the model information holding unit 107 (step S203).

The control unit 111 obtains a format corresponding to the model identified from the model identification information from the corresponding format holding unit 109. On the basis of the format of the pre-conversion image and a corresponding format of a cellular phone on the reception side, the control unit 111 determines the format of a post-conversion image (step S205).

On the basis of the format of the pre-conversion image and the format of the post-conversion image, a process in the preprocessing unit is determined (step S207), and a process in the main processing unit is determined (step S209).

The preprocessing unit 103 executes the preprocess determined in step S207 on a pre-conversion image (step S211).

The main processing unit 105 executes the main process on the image which preprocess has been performed (step S213).

In such a manner, the post-conversion image can be obtained. The post-conversion image is sent back to the mail server 101 and the pre-conversion image is replaced with the post-conversion image. The replaced post-conversion image is transmitted as an attached file to a cellular phone as a destination.

The image processing apparatus including the preprocessing unit 103, the main processing unit 105, and the control unit 111 shown in FIG. 1 can be realized by hardware, software, or combination of the hardware and software.

### [Example 1]

When the number of pixels of a post-conversion image is less than a process amount of a pre-conversion image, the preprocessing unit 103 reduces the number of pixels of the pre-conversion image to the number of pixels of the post-conversion image. In such a manner, the process amount of the main processing unit 105 can be reduced,

### [Example 2]

When the frame rate of a post-conversion moving image is less than that of a pre-conversion moving image, the preprocessing unit 103 lowers the frame rate of the pre-conversion moving image. In such a manner, the process amount of the main processing unit 105 can be reduced.

### [Example 3]

When a receiver's cellular phone can receive an image at a compression ratio less than that of a pre-conversion image, the preprocessing unit 103 decompresses a compressed pre-conversion image. In such a manner, the amount of a compressing process in the main processing unit 105 can be reduced.

### [Example 4]

When a receiver's cellular phone does not correspond to animation GIF, the preprocessing unit 103 decompresses each picture and the main processing unit 105 converts the decompressed picture to a picture of motion JPEG or the like. In such a manner, the process amount in the main processing unit can be reduced.

### [Example 5]

The total process amount in the case of dividing the conversion to obtain a post-conversion image from a pre-conversion image into two conversions is less than a process amount when the converting process is not separated, the converting process in the first half is performed by the preprocessing unit 103, and the converting process in the latter half is performed by the main processing unit 105. In such a manner, the total process amount can be reduced.

### [Example 6]

When the process amount of the latter half when the conversion to obtain an post-conversion image from a pre-conversion is divided into two conversions is smaller than the whole process amount when the conversion is not divided, the converting process in the first half is performed by the preprocessing unit 103, and the converting process in the latter half is performed in the main processing unit 105. In such a manner, the process amount in the main processing unit 105 can be reduced.

### [Example 7]

Basically, only the main processing unit 105 performs format conversion. Only when congestion occurs in the main processing unit 105, the preprocessing unit 103 performs a preprocess, and the main processing unit 105 processes an output of the preprocessing unit 103.

### [Example 8]

Basically, only the main processing unit 105 performs format conversion. Only when the difference between a format before conversion and a format after conversion is larger than a predetermined threshold, the preprocessing unit 103 performs a preprocess, and the main processing unit 105 processes an output of the preprocessing unit 103.

### [Example 9]

Basically, only the main processing unit 105 performs format conversion. Only when the difference between a screen size before conversion and a screen size after conversion is larger than a predetermined threshold, the preprocessing unit 103 performs a preprocess, and the main processing unit 105 processes an output of the preprocessing unit 103.

### [Example 10]

Basically, only the main processing unit 105 performs format conversion. Only when the difference between compression ratio of an image before conversion and compression ratio of an image after conversion is larger than a predetermined threshold, the preprocessing unit 103 performs a preprocess, and the main processing unit 105 processes an output of the preprocessing unit 103.

### [Example 11]

Basically, only the main processing unit 105 performs format conversion. Only when the difference between frame rate of a moving image before conversion and frame rate of a moving image after conversion is larger than a predetermined threshold, the preprocessing unit 103 performs a preprocess, and the main processing unit 105 processes an output of the preprocessing unit 103.

### [Example 12]

Basically, only the main processing unit 105 performs format conversion. Only when an image before conversion is transmitted from a personal computer, the preprocessing unit 103 performs a preprocess, and the main processing unit 105 processes an output of the preprocessing unit 103.

### [Example 13]

Basically, only the main processing unit 105 performs format conversion. Only when an image before conversion is transmitted from a personal computer, and combination, a logical calculation value, a weighted sum, or the like of the difference between a format of an image before conversion and a format of an image after conversion, the difference between a screen size before conversion and a screen size after conversion, the difference between compression ratio of an image before conversion and compression ratio of an image after conversion, and the difference between frame rate of a moving image before conversion and frame rate of a moving image after conversion is larger than a predetermined threshold, the preprocessing unit 103 performs a preprocess, and the main processing unit 105 processes an output of the preprocessing unit 103.

## Claims

1. An image processing apparatus for converting an input image to an image in a predetermined format, comprising:
a main processing unit capable of converting an input image to an image in a predetermined format single-handedly;
a preprocessing unit for preprocessing the input image; and
a preprocessing control unit for determining a process to be performed in the preprocessing unit so that a prescribed process amount when the preprocessing unit preprocesses an input image and, after that, the main processing unit converts the preprocessed image to an image in the predetermined format becomes less than a process amount when the main processing unit converts an input image to an image in the predetermined format single handedly,
wherein the preprocessing unit preprocesses the input image with the determined process, and the main processing unit converts the preprocessed image to an image in the predetermined format.

2. The image processing apparatus according to claim 1,
wherein the prescribed process amount is a process amount in the main processing unit.

3. The image processing apparatus according to claim 1,
wherein the prescribed process amount is a sum of a process amount in the preprocessing unit and a process amount in the main processing unit.

4. The image processing apparatus according to one of claims 1 to 3, wherein the preprocess is reduction in the number of pixels.

5. The image processing apparatus according to one of claims 1 to 3, wherein the preprocess is reduction in frame rate.

6. The image processing apparatus according to one of claims 1 to 3, wherein the preprocess is decompression of an image, the process in the main processing unit is re-compression of an image, and compression ratio in the re-compression of the image is less than compression ratio before the preprocess.

7. An image processing method for converting an input image to an image in a predetermined format, comprising:
a main processing step capable of converting an input image to an image in a predetermined format single-handedly;
a preprocessing step of preprocessing the input image and
a preprocess control step of determining a process to be performed in the preprocessing step so that a prescribed process amount when an input image is preprocessed in the preprocessing step and, after that, the preprocessed image is converted to an image in the predetermined format in the main processing step becomes less than a process amount when an input image is converted to an image in the predetermined format only in the main processing step,
wherein the input image is preprocessed with the determined process in the preprocessing step, and the preprocessed image is converted to an image in the predetermined format in the main processing step.

8. The image processing method according to claim 7,
wherein the prescribed process amount is a process amount in the main processing unit.

9. The image processing method according to claim 7,
wherein the prescribed process amount is a sum of a process amount in the preprocessing unit and a process amount in the main processing unit.

10. The image processing method according to one of claims 7 to 9, wherein the preprocess is reduction in the number of pixels.

11. The image processing method according to one of claims 7 to 9, wherein the preprocess is reduction in frame rate.

12. The image processing method according to one of claims 7 to 9, wherein the preprocess is decompression of an image, the process in the main processing step is re-compression of an image, and compression ratio in the re-compression of the image is less than compression ratio before the preprocess.

13. A computer-readable media on which a program is recorded, said program causes a computer to perform an image processing method for converting an input image to an image in a predetermined format, comprising:
a main processing step capable of converting an input image to an image in a predetermined format single-handedly;
a preprocessing step of preprocessing the input image; and
a preprocess control step of determining a process to be performed in the preprocessing step so that a prescribed process amount when an input image is preprocessed in the preprocessing step and, after that, the preprocessed image is converted to an image in the predetermined format in the main processing step becomes less than a process amount when an input image is converted to an image in the predetermined format only in the main processing step,
wherein the input image is preprocessed with the determined process in the preprocessing step, and the preprocessed image is converted to an image in the predetermined format in the main processing step.

14. The computer-readable media according to claim 13,
wherein the prescribed process amount is a process amount in the main processing unit.

15. The computer readable media according to claim 13,
wherein the prescribed process amount is a sum of a process amount in the preprocessing unit and a process amount in the main processing unit.

16. The computer-readable media according to one of claims 13 to 15, wherein the preprocess is reduction in the number of pixels.

17. The computer-readable media according to one of claims 13 to 15, wherein the preprocess is reduction in frame rate.

18. The computer-readable media according to one of claims 13 to 15, wherein the preprocess is decompression of an image, the process in the main processing step is re-compression of an image, and compression ratio in the re-compression of the image is less than compression ratio before the preprocess.
